Europäisches Patentamt

(19) **European Patent Office**

**Office européen des brevets**

(11) Numéro de publication : **0 068 942**
**B1**

(12) **FASCICULE DE BREVET EUROPÉEN**

(45) Date de publication du fascicule du brevet :
**15.05.85**

(51) Int. Cl.⁴ : **F 16 L 3/20**, F 16 F 7/06,
F 16 F 7/04

(21) Numéro de dépôt : **82401020.1**

(22) Date de dépôt : **04.06.82**

(54) **Dispositif limiteur de mouvement pour installations sous pression.**

(30) Priorité : 26.06.81 FR 8112629

(43) Date de publication de la demande :
**05.01.83 Bulletin 83/01**

(45) Mention de la délivrance du brevet :
**15.05.85 Bulletin 85/20**

(84) Etats contractants désignés :
**DE GB IT SE**

(56) Documents cités :
**DE-A- 3 013 707**
**FR-A-  633 584**
**FR-A- 1 034 033**
**FR-A- 1 120 335**
**FR-A- 2 307 188**
**FR-A- 2 327 447**
**FR-A- 2 339 786**
**FR-A- 2 386 737**
**FR-A- 2 399 579**
**FR-A- 2 432 396**
**US-A- 1 607 655**
**US-A- 1 812 817**
**US-A- 2 856 179**
**US-A- 4 236 606**

(73) Titulaire : **VIBRACHOC**
**216 Les Bureaux de la Colline de Saint Cloud**
**F-92213 Saint Cloud (FR)**

(72) Inventeur : **Le Pierres, Gildas**
**"Les Rochettes" d'Huisson Longueville**
**F-91590 La Ferte Alais (FR)**
Inventeur : **Vatin, Bertrand**
**17 avenue Concorde**
**F-91400 Orsay (FR)**

(74) Mandataire : **Weinmiller, Jürgen et al**
**Zeppelinstrasse 63**
**D-8000 München 80 (DE)**

Jouve, 18, rue St-Denis, 75001 Paris, France

## Description

La présente invention a trait à un dispositif limiteur de mouvement destiné à relier des structures dans une installation sous pression, notamment dans des centrales thermiques ou nucléaires, de façon à permettre des mouvements d'assez faible vitesse entre lesdites structures, par exemple sous l'effet de mouvements propres aux dilations thermiques mais en empêchant les mouvements d'atteindre une vitesse trop importante, et ceci grâce à une absorption notable d'énergie.

En particulier, le dispositif selon l'invention est destiné à être utilisé pour éviter ou limiter le fouettement d'une structure d'installation sous pression, telle que par exemple une conduite de gros diamètre, par rapport à une structure fixe telle qu'un bâtiment ou un corps de réacteur en cas de rupture brutale de la conduite. En effet, dans les centrales nucléaires, on fait circuler de la vapeur à très forte pression dans des canalisations de grand diamètre, en provenance d'un générateur de vapeur et l'on comprend qu'en cas de rupture d'une telle canalisation, la pression exerce sur la canalisation rompue un effort de réaction qui, pour les très fortes pressions, peut atteindre plusieurs centaines de tonnes, ce qui entraîne un fouettement brutal de la canalisation sous l'effet d'accélérations intenses. Dans le cas où le générateur de vapeur présente une réserve relativement importante de fluide sous pression, l'effet de fouettement est entretenu et, en raison des masses importantes de ces canalisations et des accélérations intenses, on peut alors assister à une destruction de l'installation ainsi que de ses moyens de contrôle, ce qui peut entraîner, notamment dans le cas de réacteurs nucléaires, des conséquences dangereuses.

On connaît déjà des dispositifs amortisseurs ou limiteurs de mouvement destinés à être utilisés dans des centrales nucléaires pour relier des structures telles que des canalisations ou conduites à des structures fixes. Ils doivent dans tous les cas autoriser des déplacements de grande amplitude dues aux variations de température.

En ce qui concerne les dispositifs mécaniques ainsi utilisés, ils peuvent être de deux types :

Dans le premier type, au-dessus d'une accélération ou d'une vitesse caractéristique de seuil, le dispositif se bloque totalement, et reste bloqué tant qu'un effort reste appliqué.

Ces dispositifs conviennent parfaitement pour protéger les tuyauteries ou matériels en cas de rupture mais ils présentent le risque de se bloquer en cas de mouvements brusques de la tuyauterie ou du matériel à protéger (variation brutale de pression lors d'une manœuvre de vanne, secousses sismiques par exemple). Ces dispositifs restent alors bloqués tant que l'effort s'applique, ce qui peut conduire à une destruction du matériel ou du dispositif lui-même, si une variation de température conduit à un déplacement de même sens que le sens de blocage. Ils ne peuvent donc être employés que dans les cas où l'on est sûr que le matériel ne subit pas, en fonctionnement nominal ou perturbé, des déplacements brusques.

Dans le deuxième type, au-dessus d'une accélération ou d'une vitesse caractéristique de seuil, le dispositif freine le mouvement sans le bloquer totalement : tant qu'un effort s'applique il y a déplacement ; on est ainsi certain qu'en cas de blocage intempestif, le système se débloquera de lui-même.

Cependant l'effort de freinage dans les dispositifs mécaniques est en général fonction de l'accélération, ce qui limite l'emploi de ces matériels au cas d'efforts alternés, par exemple dans le cas d'un séisme, ou de très faible durée, car sous l'effet d'efforts continus, ils prennent rapidement une vitesse importante et ne jouent plus leur rôle.

Certains matériels mécaniques, cependant, exercent un effort de freinage fonction de la vitesse, mais ils doivent alors être dimensionnés pour absorber de l'énergie. Les dispositifs hydrauliques fonctionnent également suivant ce principe, mais ils présentent les inconvénients de risque de fuite et, en outre, ils doivent être également dimensionnés pour éviter une trop grande élasticité due à la compressibilité du fluide. Or, dans le cas de rupture de tuyauteries de grands diamètres et de fortes pressions, les efforts mis en jeu sont énormes et les dimensions des matériels décrits ci-dessus deviendraient très importantes.

Le dispositif selon l'invention apporte une solution à ces problèmes :

— il ne se bloque pas totalement,

— il peut freiner en fonction de la vitesse.

On connaît, par ailleurs, un grand nombre de types de dispositifs absorbeurs d'énergie permettant de freiner un mouvement relatif entre deux structures, tels que des amortisseurs mécaniques ou hydrauliques. Ainsi le brevet des Etats-Unis d'Amérique n° 2 856 179 du 14 octobre 1958 décrit un absorbeur de choc pour train d'atterrissage d'aéronef dans lequel le mouvement de translation de l'une des structures, à savoir la roue, par un rapport à la structure fixe, à savoir la jambe du train, est transformé en un mouvement de rotation d'une pièce rotative présentant des moyens de friction centrifuge dont l'efficacité, croissant avec la vitesse de rotation, provoque un freinage du mouvement, ce freinage pouvant dans un certain cas être associé à un amortissement progressif, par exemple à l'aide d'un amortisseur hydraulique ou élastique. De tels dispositifs ne sont cependant pas susceptibles d'absorber des efforts aussi intenses que ceux pouvant survenir dans les cas de rupture des canalisations sous très forte pression dans les installations sous pression. Dans le cas où l'amplitude du mouvement, malgré le freinage, est telle que l'un des éléments mobiles vient buter en fin de course contre l'autre, on risque alors d'aboutir à une rupture du dispositif qui n'aura donc pu, au mieux, que limiter les dégâts sans les empêcher. Dans le cas, au contraire, où il a déjà été prévu un amortisseur provoquant un amortissement progressif au fur et à mesure de la poursuite du mouvement, l'amortisseur n'aura que peu d'effet s'il n'est pas puissant et, si au contraire il est puissant, tendra à limiter la vitesse de rotation de la pièce rotative de freinage dont l'efficacité sera alors diminuée.

La présente invention se propose de remédier à ces inconvénients et de fournir un dispositif limiteur de mouvements, dans les installations sous pression telles que notamment les conduites sous forte pression dans les centrales thermiques ou nucléaires, qui permette de limiter et contrôler efficacement le fouettement dans le cas de tubes ou canalisations de très gros diamètre sous très forte pression développant des efforts énormes.

Un autre objectif de l'invention est de réaliser un tel dispositif qui ne se bloque jamais totalement.

Un autre objectif de l'invention est de réaliser un tel dispositif qui peut freiner en fonction de la vitesse.

Un autre objectif de l'invention est de réaliser un tel dispositif qui présente un encombrement limité tout en permettant une absorption très importante d'énergie.

Ses dimensions restent raisonnables, car il a pour objet de limiter la vitesse de déplacement à des valeurs acceptables de telle sorte que l'énergie cinétique acquise par les pièces mobiles puisse être absorbée sans détériorer l'installation.

Un autre objectif de l'invention est de réaliser un tel dispositif dans lequel l'énergie cinétique est absorbée lorsque le dispositif arrive en bout de course.

Un autre objectif de l'invention est de fournir un dispositif qui, même dans le cas du maintien de l'effort pendant toute la course utile, soit en mesure de résister mécaniquement à la destruction lorsque ses parties arrivent en fin de course.

Un autre objectif encore de l'invention est de réaliser un tel dispositif qui soit de conception particulièrement simple et apte à être opérationnel pendant de très longues périodes sans entretien dans des environnements extrêmement difficiles.

Un autre objectif encore de l'invention est de fournir un tel dispositif qui soit d'un prix de revient relativement faible et économique.

L'invention a pour objet un dispositif limiteur de mouvements selon la revendication 1.

Si donc, lors d'une rupture de tuyauterie, une accélération importante prrend naissance, le dispositif selon l'invention exerce alors un effort de freinage suffisant pour limiter la vitesse de déplacement à une valeur telle que, compte tenu des masses en mouvement, on puisse arrêter lesdites masses en fin de course sans dépasser des efforts qui entraîneraient la rupture des liaisons. Il y a donc relation entre la vitesse maximale autorisée par le dispositif pour l'effort maximum appliqué et le freinage exercé en fin de course, les masses des pièces en mouvement et l'effort maximum acceptable par la liaison.

Conformément à une caractéristique particulièrement perfectionnée de l'invention, lesdits moyens d'amortissement coopèrent avec ladite pièce rotative pour provoquer, en fin de course, un freinage puissant de la pièce rotative.

Lesdits moyens d'amortissement peuvent comprendre un amortisseur extrêmement résilient et susceptible de dissiper une grande énergie pendant une faible course.

Ainsi, lesdits moyens d'amortissement peuvent avantageusement comprendre, sur l'élément qui se déplace par rapport à la pièce rotative, une pièce de friction normalement maintenue écartée d'une faible distance d'une butée solidaire du même élément par l'intermédiaire d'un élément déformable de grande raideur, tel que par exemple une rondelle Belleville, de sorte que, vers la fin de la course totale, ladite pièce coulissante vient en contact de l'élément rotatif et se met à frotter contre celui-ci avec un effort qui s'accroît par la déformation progressive de l'élément déformable de façon à fournir finalement, pendant le restant de la course, un effort de freinage particulièrement intense sur l'élément rotatif de sorte que l'on aboutit à un arrêt progressif simultané du mouvement des deux éléments et de la rotation de la pièce rotative, permettant alors au dispositif selon l'invention, sans avoir été détruit par le choc de fin de course, de continuer à résister, à la manière d'un élément cette fois rigide, à une poursuite du mouvement, et ceci après avoir freiné ce mouvement en dissipant une énergie extrêmement importante.

De préférence, la pièce rotative est constituée par une pièce en forme d'écrou intérieurement filetée et traversée par une tige filetée fixe solidaire de l'un des éléments, ladite pièce rotative étant calée axialement par rapport à l'autre élément de façon que le mouvement de translation de la tige provoque la rotation de la pièce rotative. De façon particulièrement avantageuse, les moyens de freinage de l'élément rotatif peuvent consister en des pièces de friction du type centrifuge, par exemple des segments susceptibles de coulisser radialement dans l'élément rotatif et de venir frotter contre une surface cylindrique fixe périphérique autour de l'élément rotatif.

Cependant, dans une autre forme de réalisation, la pièce rotative peut coopérer avec un fluide ou un matériau visqueux tel qu'une graisse interposée dans un espace de préférence étroit entre la pièce rotative et une paroi fixe. Ainsi la pièce rotative peut par exemple présenter une surface extérieure cylindrique faiblement écartée d'une surface intérieure cylindrique de l'élément par rapport auquel elle est axialement calée.

Ces formes de réalisation permettent de réaliser le dispositif sous une forme tubulaire particulièrement compacte et, selon la forme de réalisation préférée de l'invention, l'un des éléments présente une forme tubulaire, muni à son extrémité de moyens de fixation sur une structure, l'autre élément présentant, à partir d'un moyen de fixation sur l'autre structure, une pièce également tubulaire coulissant dans la première et portant, avec un calage axial, ladite pièce rotative et des moyens de freinage coopérant avec cette pièce tubulaire, tandis que le premier élément porte en son centre la tige filetée traversant le filetage de l'élément de la pièce rotative et portant de préférence, à ses deux extrémités, les moyens d'amortissement tels que pièce coulissante de friction séparée d'une pièce de butée solidaire de la tige par un élément élastique assez raide comme une rondelle Belleville.

Les deux éléments du dispositif qui peuvent se déplacer en translation l'un par rapport à l'autre sont avantageusement immobilisés en rotation. Ceci peut être obtenu d'une façon en soit connue par un système de clavetage usuel. Cependant dans une forme de réalisation particulièrement préférée de l'invention, on peut avantageusement obtenir ce résultat en utilisant, pour monter les deux éléments sur leurs structures respectives, des articulations à rotule présentant, transversalement à l'axe autour duquel se développe le couple apparaissant entre la tige filetée et l'écrou correspondant du dispositif, un diamètre important de façon à obtenir par une sorte d'effet de coin entre la rotule et son siège, et grâce aux efforts de traction ou compression très importants exercés sur le dispositif, un frottement suffisamment important pour reprendre le couple et empêcher une rotation entre les deux éléments du dispositif.

On obtient ainsi de plus une simplification importante du dispositif en évitant des opérations d'usinage et de montage.

D'autres avantages et caractéristiques de l'invention apparaîtront à la lecture de la description suivante, faite à titre d'exemple non limitatif et se référant au dessin annexé dans lequel :

La figure 1 représente une vue schématique en demi-coupe axiale d'un dispositif selon l'invention.

La figure 2 représente une vue schématique en coupe transversale II-II de la figure 1.

La figure 3 représente une vue en coupe axiale d'une articulation à rotule du dispositif.

La figure 4 représente une vue en plan de cette articulation.

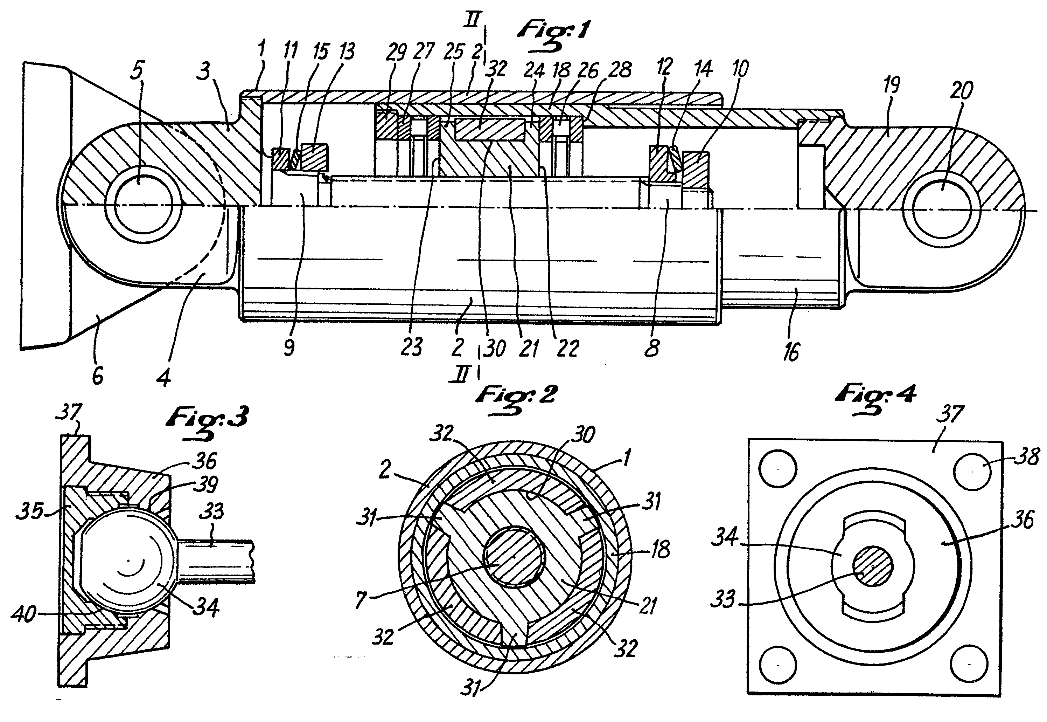

En se référant aux figures 1 et 2, on voit un dispositif selon l'invention comprenant un élément 1 et un élément 16. L'élément 1 présente une partie de forme tubulaire 2 raccordée rigidement, à l'une de ses extrémités, à un flasque de fond 3, présentant une patte 4 avec un siège traversant 5 pour la fixation d'une articulation à rotule, par exemple à une partie 6 d'une structure telle qu'une canalisation ou conduite de gros diamètre.

En sa partie centrale, le flasque 3 porte une tige rigide extérieurement filetée 7, munie d'un prolongement d'extrémité 8 et d'une partie d'origine 9 se raccordant au flasque 3, les parties de tige 8 et 9 présentant, en leurs extrémités les plus éloignées, deux bagues de butée 10, respectivement 11, axialement calées sur la tige 7 dont elles sont en conséquence rigidement solidaires. Deux bagues coulissantes 12, 13 sont susceptibles de coulisser axialement sur la tige 8 et sont maintenues normalement écartées de leurs pièces de butée respectives 10, 11 par des rondelles Belleville respectives 14, 15.

L'autre élément 16 présente également une pièce de forme tubulaire pénétrant dans la pièce tubulaire 2 et guidée de façon coulissante dans celle-ci, par exemple par une partie de diamètre extérieur plus important 18, correspondant sensiblement au diamètre interne de la pièce tubulaire 2. La pièce 17 est reliée, à son extrémité extérieure à l'élément 1, à un flasque 19 avec un siège de rotule 20 identique au siège 5. La distance entre les deux sièges 5 et 20 est par exemple de l'ordre de 1 675 mm, le diamètre extérieur de la pièce 2 étant de 470 mm.

A l'intérieur de la pièce tubulaire 17 de l'élément 16, et au niveau de la partie 18 est montée une pièce rotative 21 sous forme d'écrou et présentant un passage central intérieurement fileté et traversé par la tige filetée 7. L'angle hélicoïdal commun des filetages des pièces 7 et 21 est par exemple de l'ordre de 5 à 20°.

Extérieurement, la pièce rotative ou écrou 21 est conformée de façon à présenter deux faces radiales planes 22, 23 et une périphérie délimitée par deux collerettes 24, 25 respectivement appliquées contre deux roulements à rouleaux 26, 27 autorisant la rotation de la pièce 21 par rapport à la pièce tubulaire 17 de l'élément 16 mais interdisant tout mouvement axial relatif. Le roulement 26 est calé contre un épaulement 28 de la pièce 17 alors que le roulement 27 est calé par une bague 29 vissée dans l'extrémité intérieurement filetée de la pièce 17.

Entre les deux collerettes 24, 25, la pièce rotative 21 présente un canal annulaire dont le fond cylindrique 30 est parallèle à la surface cylindrique interne de la pièce 17 dans sa partie 18, cette gorge étant interrompue par trois prolongements radiaux transversaux 31 solidaires de la pièce 21 et rejoignant les collerettes 24, 25 à la façon des barreaux d'une cage d'écureuil, de façon à diviser la gorge en trois cavités identiques à fond cylindrique occupées chacune par un segment de friction 32 présentant une forme générale en arc de cercle. L'épaisseur de chaque segment de friction 32 est légèrement inférieure à la distance entre le fond de la cavité qui la reçoit et le tube 17.

Le fonctionnement est le suivant : lorsque, partant de la position de repos représentée sur la figure 1, une des structures, par exemple la structure 6 solidaire d'une conduite de gros diamètre, se met à bouger lentement par rapport à l'autre, l'élément 1 va se déplacer en translation par rapport à l'élément 16 qui coulisse à son intérieur. La tige filetée 7 solidaire de l'élément 1 va donc se déplacer axialement par rapport à la pièce rotative 21 qui est alors entraînée en rotation. La vitesse de rotation reste relativement faible de sorte que la force centrifuge exercée par cette rotation sur les éléments 32 est faible et le mouvement peut donc se poursuivre pratiquement sans freinage.

Lorsque par contre, la structure 6 est soumise, par rapport à l'autre, à un effort d'accélération intense, par exemple lors de la rupture de la canalisation sous forte pression, la structure de canalisation va se déplacer par rapport à l'autre structure sous l'effet du fouettage à une vitesse très rapidement croissante. Dans ces conditions, la tige 7 est rapidement animée, par rapport à la pièce rotative 21, d'un mouvement de translation rapide, ce qui va provoquer une mise en rotation à très grande vitesse de la pièce 21 sous l'effet de l'amplification provoquée par le très faible angle de leurs filetages communs. Les segments libres 32 sont alors projetés, sous l'effet de la force centrifuge, contre la paroi de la pièce 17 où ils se mettent à frotter et assurent un effet de freinage intense avec une grande dissipation d'énergie. Sous l'effet de freinage ainsi réalisé, la tige filetée 7 voit sa vitesse limitée, par exemple à une valeur de 50 cm par seconde pour un effort de 500 tonnes, de sorte que le mouvement de fouettage se trouvera ralenti et maîtrisé. Si la pression dans le tube rompu baisse assez rapidement, le mouvement va se ralentir. Si par contre cette pression se maintient à une valeur élevée pendant une durée relativement longue, la pièce rotative 21 va se rapprocher, suivant la direction du mouvement, de la bague de friction 12 ou de la bague de friction 13 par sa face correspondante 22 ou 23. Vers la fin de course, cette face, par exemple la face 22, va venir en contact avec la bague de friction 12 calée en rotation par rapport à la partie 8 de la tige 7 de sorte que cette bague va exercer un effort de friction sur la face 22 de la pièce rotative 21 soumise à une vitesse de rotation importante. Lors de la poursuite du mouvement, la pièce 12 coulissante va être progressivement rapprochée de sa butée 10 par déformation progressive de la rondelle Belleville élastique 14 qui, au fur et à mesure de sa déformation, sollicite la pièce 12 vers la face 22 de l'écrou 21 avec une force croissante de sorte que le freinage provoqué par la friction de la bague 12 contre la pièce rotative 21 va s'amplifier.

Grâce à un choix judicieux des dimensions et de la raideur des rondelles Belleville, on peut ainsi aboutir à l'arrêt avec une vitesse de rotation nulle en ayant dissipé une grande partie de l'énergie en fin de course et ceci sans risque de rupture du dispositif sous l'effet de chocs de fin de course.

Bien entendu, l'invention telle que représentée peut faire l'objet de nombreuses variantes. Ainsi, les moyens de freinage, au lieu d'utiliser des segments centrifuges 32, peuvent être réalisés autrement. En particulier, on pourrait réaliser la pièce 21 de façon pratiquement cylindrique à sa périphérie en interposant entre cette périphérie et la pièce 17 une graisse visqueuse de façon à produire un effet de freinage augmentant rapidement avec la vitesse. D'autres moyens de freinage peuvent éventuellement être utilisés mais on préfère cependant des solutions simples en particulier celle représentée sur le dessin car elle assure une fiabilité totale pour un entretien nul.

En se référant aux figures 3 et 4, on voit une variante du dispositif dans laquelle on utilise, pour empêcher une rotation de l'élément 1 par rapport à l'élément 16, au lieu d'un dispositif à clavette (non représenté sur le dessin), des articulations à rotule. Les pattes 3, 19 des éléments 1, 16 sont alors remplacées par exemple par une tige axiale 33 dont l'extrémité libre porte une rotule 34 sensiblement en forme de sphère. Le siège de rotule, solidaire d'une structure, par exemple une tuyauterie, est composé de deux demi-sièges 35, 36 dont l'un porte une base 37 pour des orifices 38 de fixation sur la structure. Les portées annulaires 39, 40 des demi-sièges sont disposées de part et d'autre du plan transversal à la tige 33 de sorte que la rotule 34 porte sur son siège au voisinage de sa surface transversalement écartée de l'axe géométrique des éléments 1, 16. On voit que les demi-sièges 39, 40 forment ainsi une des zones annulaires peu inclinées par rapport à cet axe. En conséquence, lorsque le dispositif est amené à fonctionner, il se produit, par une sorte d'effet de coin, un effort de friction très intense entre la rotule et son siège, et ceci à chaque extrémité du dispositif de sorte que le couple tendant à faire tourner l'élément 1 par rapport à l'élément 16 est repris par les deux articulations à rotule et les deux éléments restent angulairement immobiles.

## Revendications

1. Dispositif limiteur du mouvement relatif entre deux structures, notamment contre le fouettage de canalisations de gros diamètre sous très forte pression en cas de rupture brutale, dans lequel un premier élément (1) solidaire de l'une des structures est susceptible d'un mouvement de translation par rapport à un deuxième élément (16) solidaire de l'autre structure, et présentant des moyens pour transformer ledit mouvement de translation en un mouvement de rotation à grande vitesse d'une pièce rotative (21) coopérant avec des moyens de freinage à efficacité croissant avec la vitesse de rotation, caractérisé en ce que des moyens d'amortissement puissants (12, 13) du mouvement relatif desdits deux éléments (1, 16) sont interposés entre lesdits deux éléments (1, 16) pour être actionnés vers la fin de la course maximale d'un élément par rapport à l'autre, lesdits moyens d'amortissement étant inactifs pendant la majeure partie de la course totale.

2. Dispositif selon la revendication 1, caractérisé en ce que les moyens d'amortissement (12, 13) coopèrent avec ladite pièce rotative (21) pour provoquer, en fin de course, un freinage puissant de la pièce rotative (21).

3. Dispositif selon la revendication 2, caractérisé en ce que l'élément (1) qui se déplace par rapport à la pièce rotative (21) comprend une pièce de friction (12, 13) maintenue normalement écartée d'une faible distance d'une butée (10, 11) solidaire du même élément (1) par l'intermédiaire d'un élément déformable de grande raideur (14, 15) de sorte que, vers la fin de la course totale, ladite pièce de friction coulissante (12, 13) vient au contact de la pièce rotative (21) et se met à frotter contre celle-ci avec un effort qui s'accroît par la déformation progressive de l'élément déformable (14, 15).

4. Dispositif selon l'une quelconque des revendications 1 à 3, caractérisé en ce que la pièce rotative (21) est constituée par une pièce en forme d'écrou intérieurement fileté, traversée par une tige filetée correspondante (7) solidaire de l'un des éléments (1), ladite pièce rotative (21) étant axialement calée par rapport à l'autre élément (16).

5. Dispositif selon l'une quelconque des revendications 1 à 4, caractérisé en ce que les moyens de freinage de la pièce rotative (21) comprennent des segments (32) de friction du type centrifuge, susceptibles de coulisser radialement dans l'élément rotatif (21) et de venir frotter contre une surface cylindrique fixe périphérique (18) autour de la pièce rotative.

6. Dispositif selon l'une quelconque des revendications 1 à 4, caractérisé en ce que lesdits moyens de freinage de l'élément rotatif (21) comportent un matériau visqueux interposé dans un espace étroit entre la pièce rotative (21) et une paroi fixe.

7. Dispositif selon l'une quelconque des revendications 1 à 6, caractérisé en ce que chaque élément (1, 16) présente une partie de forme tubulaire (2, 17) dont l'une (17) coulisse dans l'autre (2).

8. Dispositif selon l'une quelconque des revendications 1 à 7, caractérisé en ce que les éléments (1, 16) sont reliés à leurs structures par des articulations à rotule dans lesquelles la rotule (34) porte sur un siège de rotule (39, 40) transversalement éloigné de l'axe géométrique du dispositif et faiblement incliné par rapport à cet axe pour provoquer, en cas de fonctionnement du dispositif, une reprise par friction du couple tendant à faire tourner l'un des éléments (1, 16) par rapport à l'autre.

**Claims**

1. A device for limiting the relative movement between two structures, especially against the whipping of piping of large diameter under very high pressure in the event of violent bursting, in which a first member (1) integral with one of the structures is capable of a movement of translation with respect to a second member (16) integral with the other structure, and exhibiting means of converting the said movement of translation into a movement of rotation at high speed by a rotary part (21) which cooperates with means of braking of an efficacy which increases with the speed of rotation, characterized in that powerful means (12, 13) of damping the relative movement of the said two members (1, 16) are interposed between the said two members (1, 16) in order to be actuated towards the end of the maximum travel of one member with respect to the other, the said means of damping being inactive during the greater portion of the total travel.

2. A device as in Claim 1, characterized in that the means (12, 13) of damping cooperate with the said rotary part (21) in order at the end of the travel to cause powerful braking of the rotary part (21).

3. A device as in Claim 2, characterized in that the member (1) which moves with respect to the rotary part (21) comprises a friction part (12, 13) which is normally held at a short distance away from a stop (10, 11) which is locked into the same member (1) by way of a deformable member of great stiffness (14, 15), so that towards the end of the total travel the said sliding friction part (12, 13) comes into contact with the rotary part (21) and begins to rub against it with a force which increases with the progressive deformation of the deformable member (14, 15).

4. A device as in any one of the Claims 1 to 3, characterized in that the rotary part (21) consists of a part in the form of an internally threaded nut through which passes a corresponding threaded rod (7) integral with one of the members (1), the said rotary part (21) being keyed axially with respect to the other member (16).

5. A device as in any one of the Claims 1 to 4, characterized in that the means of braking the rotary part (21) comprise friction segments (32) of centrifugal type, which are capable of sliding radially in the rotary member (21) and coming to rub against a fixed cylindrical surface (18) peripheral about the rotary part.

6. A device as in any one of the Claims 1 to 4, characterized in that the said means of braking the rotary member (21) include a viscous material interposed in a narrow gap between the rotary part (21) and a fixed wall.

7. A device as in any one of the Claims 1 to 6, characterized in that each member (1, 16) exhibits a portion of tubular shape (2, 17), one (17) of which slides in the other (2).

8. A device as in any one of the Claims 1 to 7, characterized in that the members (1, 16) are connected to their structures by ball-and-socket joints in which the ball (34) bears against a spherical seating (39, 40) which is removed transversely from the geometric axis of the device and slightly inclined with respect to this axis in order in the event of operation of the device to cause a frictional reaction against the torque tending to make one of the members (1, 16) turn with respect to the other.

**Patentansprüche**

1. Vorrichtung zur Begrenzung der relativen Bewegung zwischen zwei Strukturen, insbesondere gegen Peitschenbewegungen von plötzlich berstenden Leitungen großen Durchmessers, die unter sehr starkem Druck stehen, bei der ein erstes Element (1), das fest mit einer der Strukturen verbunden ist, eine Translationsbewegung in bezug auf ein zweites, mit der anderen Struktur fest verbundenes Element (16) durchführen kann und die Mittel zur Umwandlung dieser Translationsbewegung in eine sehr schnelle Drehbewegung eines Drehstücks (21) aufweist, das mit Bremsmitteln zusammenwirkt, deren Wirkung sich mit der Rotationsgeschwindigkeit verstärkt, dadurch gekennzeichnet, daß Mittel (12, 13) zur kräftigen Dämpfung der Relativbewegung der beiden Elemente (1, 16) zwischen den beiden Elementen (1, 16) angeordnet sind, um gegen das Ende des maximalen Translationshubs eines Elements in bezug auf das andere betätigt zu werden, wobei die Dämpfungsmittel während des größten Teils der gesamten Translationsbewegung inaktiv sind.

2. Vorrichtung nach Anspruch 1, dadurch gekennzeichnet, daß die Dämpfungsmittel (12, 13) mit dem Drehstück (21) zusammenwirken, um am Ende des Translationshubs eine kräftige Bremsung des Drehstücks (21) zu bewirken.

3. Vorrichtung nach Anspruch 2, dadurch gekennzeichnet, daß das Element (1), das sich in bezug auf das Drehstück (21) bewegt, ein Reibungsstück (12, 13) aufweist, das normalerweise in geringer Entfernung von einem Anschlag (10, 11) gehalten wird, der mit dem gleichen Element (1) fest über ein sehr steifes verformbares Element (14, 15) verbunden ist, so daß gegen Ende des gesamten Translationshubs das gleitende Reibungsstück (12, 13) mit dem Drehstück (21) in Berührung kommt und mit einer Kraft dagegen reibt, die mit der progressiven Verformung des verformbaren Elements (14, 15) zunimmt.

4. Vorrichtung nach einem beliebigen der Ansprüche 1 bis 3, dadurch gekennzeichnet, daß das Drehstück (21) aus einem Stück in Form einer mit Innengewinde versehenen Mutter besteht, die von einem entsprechenden, mit Gewinde versehenen und fest mit einem der Elemente (1) verbundenen Stab (7) durchquert wird, wobei das Drehstück (21) axial in bezug auf das andere Element (16) festgelegt ist.

5. Vorrichtung nach einem beliebigen der Ansprüche 1 bis 4, dadurch gekennzeichnet, daß die Bremsmittel des Drehstücks (21) Reibsegmente (32) vom Zentrifugentyp aufweisen, die radial im Drehstück (21) gleiten und an einer festen, peripheren, zylindrischen Oberfläche (18) rund um das Drehstück reiben können.

6. Vorrichtung nach einem beliebigen der Ansprüche 1 bis 4, dadurch gekennzeichnet, daß die Bremsmittel des Drehstücks (21) ein viskoses Material aufweisen, das in einen engen Raum zwischen dem Drehstück (21) und einer festen Wand eingelegt ist.

7. Vorrichtung nach einem beliebigen der Ansprüche 1 bis 6, dadurch gekennzeichnet, daß jedes Element (1, 16) einen rohrförmigen Bereich (2, 17) aufweist, von dem einer (17) im anderen (2) gleitet.

8. Vorrichtung nach einem beliebigen der Ansprüche 1 bis 7, dadurch gekennzeichnet, daß die Elemente (1, 16) mit ihren Strukturen durch Kugelgelenke verbunden sind, bei denen der Kugelkopf (34) auf einem Kugelkopfsitz (39, 40) aufliegt, der transversal von der geometrischen Achse der Vorrichtung entfernt ist und in bezug auf diese Achse leicht geneigt ist, um bei Betrieb der Vorrichtung das Drehmoment, das eines der Elemente (1, 16) bezüglich des anderen verdrehen möchte, durch Reibung abzuleiten.

0 068 942

Fig.1  Fig.2  Fig.3  Fig.4